# FASCICULE DE BREVET EUROPEEN

(11) **EP 3 496 973 B1**
(45) Date de publication et mention de la délivrance du brevet: **07.10.2020**
(21) Numéro de dépôt: 17758224.4
(22) Date de dépôt: 25.07.2017
(51) Int. Cl.: B60N 3/00, B60R 7/04

(54) **CONSOLE CONVERTIBLE EN TABLE POUR VÉHICULE AUTOMOBILE À CONVERSION FACILITÉE**
IN EINE TISCH VERWANDELBARE KONSOLE FÜR EIN FAHRZEUG MIT EINFACHER VERWANDLUNG
CONSOLE CONVERTIBLE INTO A TABLE FOR A VEHICLE WITH CONVERSION MADE EASIER

(30) Priorité: 11.08.2016 FR 1657716
(43) Date de publication de la demande: 19.06.2019
(73) Titulaire: PSA Automobiles SA, 78300 Poissy (FR)
(72) Inventeur: BALLANDRAS, Philippe, 25700 VALENTIGNEY (FR); DALVERNY, Nicolas, 25630 SAINTE SUZANNE (FR); LOUBATIE, Pascal, 94800 VILLEJUIF (FR)
(86) Numéro de dépôt international: PCT/FR2017/052054
(87) Numéro de publication internationale: WO 2018/029412

(56) Documents cités:
- EP-A1- 1 636 087
- FR-A1- 2 850 332
- FR-A1- 3 007 341

## Description

### Domaine de l'invention

La présente invention concerne l'agencement de l'habitacle des véhicules automobiles de type monospace ou utilitaires, qui comportent plusieurs rangées de sièges latéraux agencés symétriquement de part et d'autre de l'axe longitudinal médian du véhicule.

L'invention vise en particulier une console convertible en table destinée à être montée coulissante sur le plancher d'un tel véhicule le long de son axe longitudinal médian.

### Arrière-plan de l'invention

Les véhicules de type monospace à habitacle modulable et les véhicules utilitaires de type fourgon dédiés au transport de passagers sont de plus en plus employés dans un cadre « loisirs », notamment en période de vacances.

Ce type de service a conduit les constructeurs automobiles à intégrer une table dans l'habitacle de ces véhicules afin d'améliorer le confort des passagers.

Pour préserver l'espace disponible à l'intérieur de l'habitacle du véhicule lorsque la table n'est pas utilisée, cette dernière est généralement escamotable.

Il est ainsi connu, notamment de la demande de brevet française FR 2 850 332, de prévoir une console destinée à être montée coulissante sur le plancher d'un véhicule le long de l'axe longitudinal médian et comportant un caisson définissant au moins un logement latéral vertical accessible par une fente d'entrée, ainsi qu'au moins un plateau monté mobile sur ledit caisson via des moyens de guidage à coulissement et à pivotement entre une position rangée dans laquelle ledit plateau est reçu dans ledit logement et une position déployée dans laquelle ledit plateau s'étend à l'horizontale de sorte à former une table.

Chaque plateau rectangulaire est monté coulissant verticalement dans un logement correspondant par des moyens de guidage verticaux comportant deux pions agencés aux extrémités inférieures du plateau et reçus à coulissement dans deux glissières verticales s'étendant le long des extrémités longitudinales verticales du logement.

Les deux glissières verticales se prolongent à leurs extrémités supérieures par des glissières horizontales destinées à recevoir les pions de guidage pour permettre, une fois que le plateau a été extrait verticalement de son logement et rabattu horizontalement, de le maintenir en porte à faux sur le caisson.

A l'usage, le guidage vertical du plateau s'avère insatisfaisant car ce dernier a tendance à s'arc-bouter lorsqu'un utilisateur tente de l'extraire de son logement respectif, ce qui complique considérablement son déploiement en table.

La demande de brevet française FR 3007341 décrit l'agencement d'une console montée coulissante sur le plancher d'un habitacle de véhicule, comportant des compartiments de rangements et des éléments convertibles pour créer une table, les éléments convertibles de la table sont constitués d'un support en L articulé, la branche longue du support recevant deux panneaux montés coulissants et dépliables pour constituer le plateau de la table et l'autre branche courte, un pied mobile lorsque la table est en position déployée, le support en L est repliable sur la largeur de la console et les panneaux sont accolés aux flancs des compartiments de rangements de la console lorsque la table est en position rangée.

A l'usage, le déploiement de la console n'est pas évident à mettre en œuvre, notamment lors du coulissement des plateaux.

### Objet et résumé de l'invention

La présente invention vise donc à améliorer le guidage à coulissement vertical du plateau en évitant son arc-boutement.

Elle propose à cet effet une console pour véhicule automobile destinée à être montée coulissante sur le plancher dudit véhicule le long de son axe longitudinal médian, ladite console comportant un caisson définissant au moins un logement latéral vertical accessible par une fente d'entrée, ainsi qu'au moins un plateau monté mobile sur ledit caisson via des moyens de guidage à coulissement et à pivotement entre une position rangée dans laquelle ledit plateau est reçu dans ledit logement et une position déployée dans laquelle ledit plateau s'étend à l'horizontale de sorte à former une table ; lesdits moyens de guidage comportant, pour chaque dit plateau, une poutre cylindrique solidaire dudit caisson et s'étendant le long de la fente d'entrée du logement correspondant, ainsi qu'une platine de guidage montée à rotation sur ladite poutre, ladite platine comprenant un guide s'étendant radialement vis-à-vis de ladite poutre et étant monté solidaire à coulissement le long d'un profilé s'étendant le long dudit plateau.

Les moyens de guidage que comportent la console selon l'invention permettent d'assurer un excellent guidage à coulissement vertical du plateau, dénué quasiment de jeu de sorte à éviter tout risque d'arc-boutement de ce dernier lors de son extraction du logement du caisson.

Selon des caractéristiques préférées de la console, prises seules ou en combinaison :
- ledit guide présente une longueur au moins deux fois supérieure à la largeur dudit profilé ;
- ladite platine comporte au moins une languette dont l'extrémité libre est apte, lors du rangement dudit plateau dans son logement, à glisser à frottement le long d'une nervure ménagée le long dudit plateau de sorte à ralentir sa descente ;
- ladite platine comporte deux dites languettes s'étendant symétriquement de part et d'autre dudit guide et aptes à coopérer avec deux dites nervures s'étendant symétriquement de part et d'autre dudit profilé ;
- ladite platine comprend au moins une patte de verrouillage s'étendant radialement vis-à-vis de ladite poutre et portant une dent prévue pour coopérer par encliquetage, lorsque ledit plateau vient occuper ladite position rangée, avec un ergot correspondant saillant de la face interne dudit plateau ;
- lesdits moyens de guidage comportent également, pour chaque dit plateau, au moins un organe de guidage complémentaire ménagé sur ledit caisson le long de l'une des parois définissant ledit logement et apte à être traversé à coulissement par ledit profilé lors du rangement dudit plateau ;
- ledit organe de guidage complémentaire comprend également une languette apte, lors du rangement dudit plateau dans son logement, à glisser à frottement le long dudit profilé de sorte à ralentir la descente dudit plateau ;
- lesdits moyens de guidage comportent, pour chaque dit plateau, deux dits organes de guidage complémentaires aptes à être traversés successivement à coulissement par ledit profilé lors de son rangement dans ledit logement ;
- chaque dit plateau comprend au moins une butée apte à venir au contact de ladite poutre afin d'éviter l'extraction complète dudit plateau hors de son logement lorsqu'il est déployé par l'usager ; et/ou
- chaque dit plateau comporte au moins une cale présentant un renfoncement d'accueil à fond hémicylindrique complémentaire de ladite poutre et apte, lorsque ledit plateau vient occuper ladite position rangée, à recevoir ladite poutre de sorte à éviter tout débattement transversal dudit plateau.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue en perspective de trois quart avant de la console selon l'invention en configuration escamotée ;
- la figure 2 est une vue en perspective de trois quart avant de la console selon l'invention en configuration de service ;
- la figure 3 représente une vue de côté de la console en configuration de service ;
- la figure 4 représente une vue en coupe transversale de la console selon le plan de coupe transversal IV-IV de la figure 3 et sur laquelle l'un des deux plateaux est rentré dans son logement tandis que le second est relevé au maximum à la verticale ;
- la figure 5 est une vue similaire à la figure 4 mais sur laquelle le plateau en position relevée a été déployé à l'horizontale ;
- les figures 6 et 7 sont des vues en perspective respectivement de la platine de guidage et de l'un des deux organes de guidage secondaires ;
- la figure 8 est une vue partielle en section transversale de la console selon le plan de coupe transversal VIII-VIII de la figure 3 ;
- la figure 9 représente une vue partielle en section transversale de la console selon le plan de coupe transversal IX-IX de la figure 3 ;
- la figure 10 est une vue en perspective de l'un des plateaux de la console ; et
- les figures 11, 12 et 13 sont des vues en section de la console prises respectivement selon les plans XI, XII et XIII de la figure 3.

### Description détaillée d'un mode de réalisation préféré

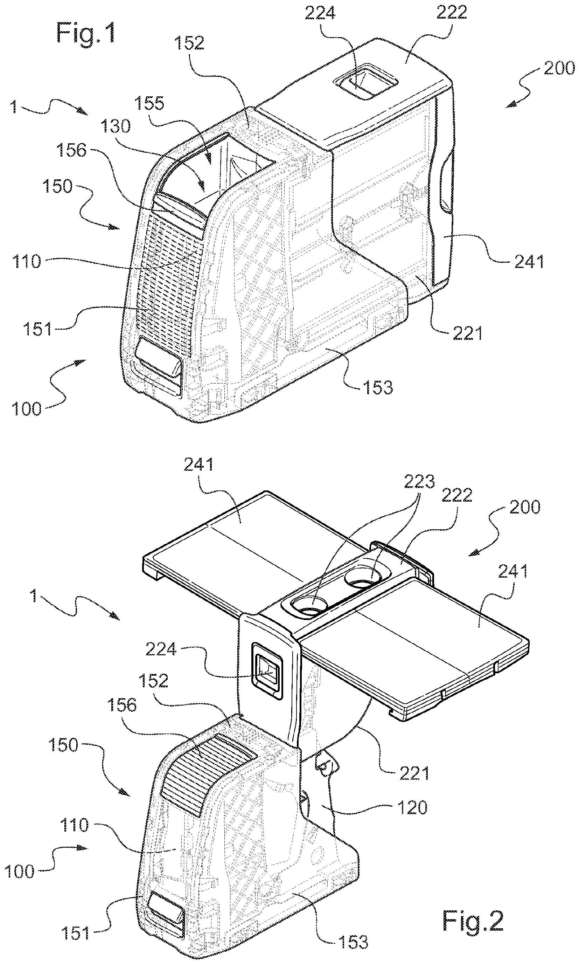

La console 1 représentée sur les figures 1 à 3 est destinée à être montée coulissante sur le plancher d'un véhicule automobile de type monospace ou utilitaire le long de l'axe longitudinal médian de ce véhicule entre les deux sièges de chacune des différentes rangées de sièges.

Par convention, les termes « avant », « arrière », « longitudinal » et « transversal » sont définis par rapport à la position de montage de cette console 1 dans l'habitacle du véhicule.

La console 1 est constituée d'un caisson support de rangement 100 ainsi que d'un caisson table 200 articulé sur ce caisson support de rangement.

Le caisson support de rangement 100 comporte une structure interne 110 recouverte d'un habillage 150.

Cette structure interne 110 comporte en partie inférieure un rail longitudinal mâle de guidage 113 prévu pour être monté mobile à coulissement à l'intérieur et le long d'un rail femelle fixe implanté dans le plancher le long de l'axe longitudinal médian du véhicule.

La structure interne 110 comprend également une jambe support creuse 120 s'étendant sensiblement verticalement au dessus de la partie arrière du rail 113 et dont l'extrémité supérieure porte un axe d'articulation transversal (non visible sur les figures) et autour duquel est articulé à pivotement le caisson table 200.

Comme illustré par la figure 1, la structure interne 110 comporte en outre, à l'avant de la jambe 120 et au dessus du rail 113, un bac 130 ouvert sur le dessus et définissant une cavité de rangement.

L'habillage 150 ouvert sur l'arrière est délimité par une façade avant 151, une paroi supérieure 152 et deux flasques latéraux 153.

La paroi supérieure 152 présente une fenêtre rectangulaire 155 située à l'aplomb du bac de rangement 130 et par laquelle les utilisateurs ont accès à ce bac 130.

L'habillage 150 comprend en outre un rideau de couverture à lamelles 156 monté coulissant le long et en dessous de la façade avant 151 et de la paroi supérieure 152 entre une position d'ouverture dans laquelle il est dissimulé derrière la façade avant 151 et où la fenêtre d'accès 155 est ouverte (figure 1), et une position de fermeture dans laquelle il couvre cette fenêtre d'accès 155 (figure 2).

Le caisson table 200 comporte une structure interne en L 210 dont les faces latérales sont couvertes par deux flasques latéraux 221 présentant des profils échancrés en arc de cercle complémentaires de ceux des deux flasques latéraux 153 de l'habillage 150 du caisson support de rangement 100.

Cette structure interne 210 comprend une première branche non visible sur les figures et articulée à pivotement sur la jambe 120 de la structure interne 110, ainsi qu'une seconde branche 214 lui étant perpendiculaire.

Les tranches externes de la structure 210 sont en outre recouverte d'un cache 222 dont la portion couvrant la seconde branche 214 présente des évidements cylindriques 223 constituants des porte-gobelets aptes à recevoir par exemple les canettes ou les bouteilles logées dans le bac de rangement 130 (figure 2).

Le caisson table 200 comporte en outre une poignée de déverrouillage 224 montée sur la première branche de la structure interne 210 et accessible depuis l'extérieur de ce caisson 200 grâce à une découpe ménagée dans le cache 222.

Cette poignée 224, reliée à un mécanisme interne (non détaillé ici et ne faisant pas l'objet de la présente invention), permet à l'usager de faire pivoter ce caisson table 200 entre une position rabattue dans laquelle il s'étend dans le prolongement arrière du caisson de rangement support 100 (figure 1), et une position relevée à 90° dans laquelle il s'étend au dessus à l'arrière de ce même caisson support de rangement 100 (figure 2).

Dans la position rabattue du caisson table 200, les première et seconde branches 214 de la structure interne en L 210 s'étendent respectivement horizontalement et verticalement ; tandis que les flasques latéraux 221 et ceux complémentaires 153 du caisson support de rangement 100 forment, deux à deux, deux flasques latéraux continus sensiblement rectangulaires (figure 1).

Dans la position relevée de ce caisson table 200, la première branche de la structure interne en L 210 prolonge verticalement la jambe support 120 pour former avec elle un montant support, tandis que la seconde branche 214 s'étend horizontalement vers l'arrière et donc à l'opposé du bac de rangement 130 (figures 2 à 5).

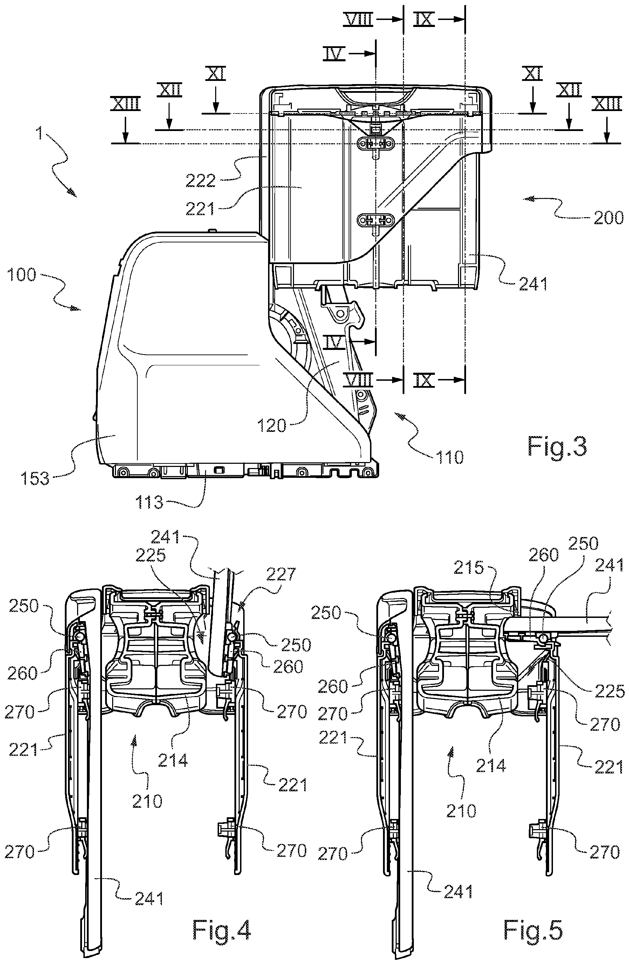

Entre la structure interne en L 210 et les deux flasques latéraux 221, le caisson table 200 définit deux logements latéraux 225 verticaux opposés transversalement et aptes chacun à recevoir via une fente d'entrée respective 227 un plateau rectangulaire correspondant 241 (figure 4).

Chaque plateau 241 est monté mobile sur le caisson table 200 par des moyens de guidage à coulissement et à pivotement entre une position rangée dans laquelle il est reçu dans le logement correspondant 225 en s'étendant globalement dans un plan longitudinal vertical (figures 1 et 3), et une position déployée dans laquelle il s'étend quasiment entièrement hors de son logement 225 dans un plan sensiblement horizontal et parallèle à la seconde branche 214 de la structure interne en L 210 pour former une moitié de table (figure 2).

La console 1 est donc apte à passer d'une configuration escamotée dans laquelle le caisson table 200 occupe sa position rabattue tandis que les plateaux 241 sont en position rangée (figure 1), à une configuration de service dans laquelle ce caisson table 200 occupe sa position relevée tandis que les plateaux 241 s'étendent à l'horizontale en position déployée de part et d'autre du caisson 200 de sorte à former une table (figure 2).

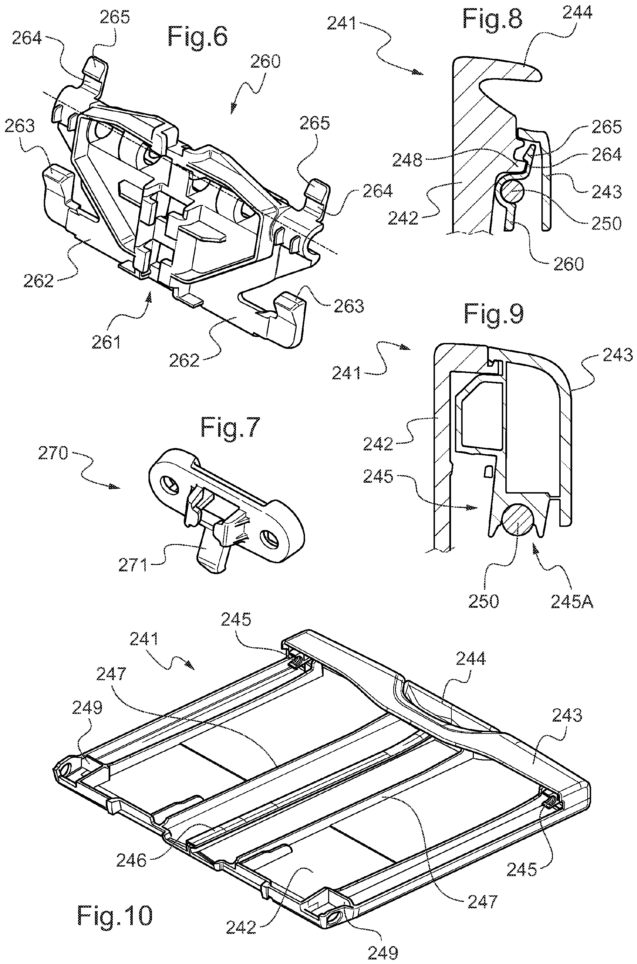

Comme illustré par la figure 10, chacun des plateaux 241 est constitué d'un panneau rectangulaire métallique 242 (de préférence en aluminium pour limiter la masse) et d'un enjoliveur 243 en matière plastique (par exemple, en polypropylène) apte à recouvrir la face externe de la portion d'extrémité extérieure du panneau 242 saillant du logement 225 lorsque ce plateau 241 est en position rentrée (figures 3 à 5), de sorte à assurer une continuité avec le flasque latéral correspondant 221.

Afin de faciliter leur manipulation par l'utilisateur, chacun des plateaux 241 est en outre pourvu au niveau de cette portion saillante du panneau 242 d'un bec de préhension 244 (figure 8).

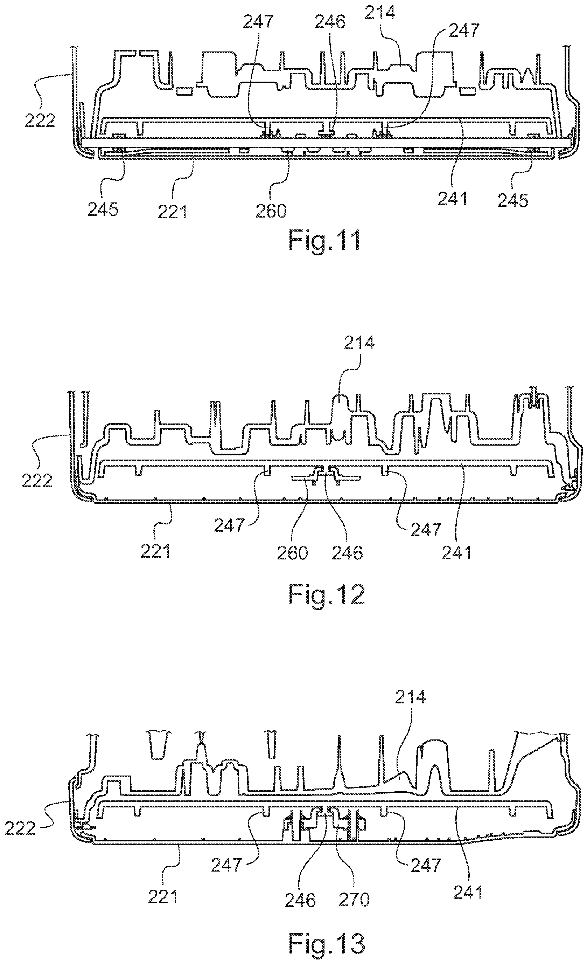

Les moyens de guidage à coulissement et à pivotement comportent, pour chaque plateau 241, une poutre cylindrique 250 métallique solidaire de la structure interne 210 du caisson table 200 et s'étendant le long de la fente d'entrée 227 du logement correspondant 225, ainsi qu'une platine de guidage 260 montée à rotation en partie centrale de la poutre 250 (figure 11).

Cette platine 260, représentée seule sur la figure 6, est venue avantageusement de moulage d'une seule pièce à partir d'un polymère thermoplastique présentant une résistance mécanique élevée tel que le tel que le polyoxyméthylène (POM).

Elle comporte un guide 261 s'étendant radialement vis-à-vis de la poutre 250 et monté solidaire à coulissement le long d'un profilé à section en T 246 s'étendant le long de la face externe du panneau 242 au niveau de son plan médian (figures 10 et 12).

Le guide 261 présente une longueur au moins deux fois supérieure à la largeur du profilé en T 246 ce qui permet d'obtenir un guidage quasiment sans jeu de sorte à assurer un coulissement parfaitement vertical du plateau 241 lors de son extraction du logement 225 (pas de risque d'arc-boutement).

La platine 260 comporte également deux languettes de ralentissement 262 s'étendant symétriquement de part et d'autre du guide 261 et portant à leurs extrémités libres respectives deux dents 263 aptes à coopérer avec deux nervures 247 s'étendant symétriquement de part et d'autre du profilé en T 246 le long de la face interne du panneau 242.

Lors du rangement du plateau 241 dans le logement 225, ces dents 263 glissent à frottement le long des deux nervures 247 de sorte à ralentir la descente par gravité de ce plateau 241.

La platine 260 comprend en outre à ses extrémités longitudinales deux pattes de verrouillage 264 s'étendant radialement vis-à-vis de la poutre 250 à l'opposé du guide 261 et portant chacune une dent 265 prévue pour coopérer par encliquetage, lorsque le plateau 241 vient occuper sa position rangée dans le logement 225, avec un ergot correspondant 248 saillant de la face interne du panneau 242 (figure 8) de sorte à empêcher tout coulissement horizontal vers l'arrière du plateau 241 lorsque la console 1 occupe sa configuration escamotée.

Chaque enjoliveur 243 de plateau 241 comporte avantageusement à proximité de ses extrémités longitudinales deux cales 245 présentant chacune un renfoncement d'accueil 245A en V à fond hémicylindrique complémentaire de la poutre 250 et apte, lorsque le plateau 241 vient se ranger dans le logement 225, à recevoir cette poutre 250 de sorte à éviter tout débattement transversal de ce plateau 241 lorsque la console 1 est soumise à des niveaux de vibrations importants (figure 9).

On remarquera que le fait de ménager ces cales 245 sur l'enjoliveur plastique 243 plutôt que sur le panneau métallique 242 permet d'éviter la génération de bruits métalliques parasites au moment de l'entrée en contact entre ces dernières et la poutre 250.

Les moyens de guidage à coulissement et à pivotement comportent également, pour chaque plateau 241, deux organes de guidage complémentaires 270 ménagés le long de la face interne du flasque latéral correspondant 221 et aptes à être traversés successivement à coulissement par le profilé en T 246 du plateau 241 lors de son rangement dans le logement 225.

Ces deux organes de guidage complémentaires 270, dont l'un est montré seul sur la figure 7, sont venus avantageusement de moulage d'une seule pièce à partir du même polymère thermoplastique constituant la platine 260.

Hormis le fait d'améliorer encore la qualité de guidage à coulissement du plateau 241 dans le logement 225, ces organes de guidage complémentaires 270 permettent également d'éviter qu'une portion de ce plateau 241 ne se trouve en porte-à-faux lorsque la console 1 occupe sa configuration escamotée (ce qui solliciterait de manière trop importante la platine 260 et pourrait également entrainer des vibrations génératrices de bruits parasites à l'intérieur de la console 1).

Chaque organe de guidage complémentaire 270 comprend également une languette 271 apte à glisser à frottement le long du profilé en T 246 de sorte à ralentir encore la descente par gravité du plateau 241 lors de son rangement dans le logement 225.

A proximité des deux coins de son extrémité intérieure, le plateau 241 comprend en outre deux butées 249 saillant de la face interne du panneau 242 et aptes à venir au contact de la poutre 250 afin d'éviter l'extraction complète de ce plateau 241 hors de son logement correspondant 225 lorsqu'il est déployé par l'usager.

On remarquera à l'appui de la figure 4 que lorsque le plateau 241 arrive dans cette position verticale extrême, son profilé en T 246 ne coopère plus avec les deux organes de guidage complémentaires 270, de sorte que ce plateau 241 peut alors être déployé à pivotement avec la platine 260 autour de l'axe formé par la poutre 250 (cette platine 260 demeurant articulée à coulissement le long du profilé en T 246).

Lorsque le plateau 241 a pivoté de 90° pour occuper sa position déployée à l'horizontale, son extrémité intérieure vient reposer contre une butée de retenue 215 ménagée sur le bras 214 de la structure interne 210 du caisson table 200 et assurant le maintien de ce plateau 241 à l'horizontale (figure 5).

Bien entendu, la présente invention ne se limite pas aux formes de réalisation décrites et représentées, mais englobe également toutes les variantes d'exécution à la portée de l'homme du métier.

On pourra par exemple prévoir de ménager sur chacune des deux nervures 247 un point dur apte à coopérer avec une languette de ralentissement correspondante 262 pour empêcher le plateau 241 de venir se ranger complètement dans le logement 225 par la seule action de la gravité, de sorte à éviter tout risque de pincement des doigts d'un usager entre l'enjoliveur 243 de ce plateau 241 et le flasque latéral correspondant 221.

La console pourrait également comporter un seul plateau associé à un logement unique et formant la table lorsqu'il occupe sa position déployée.

## Revendications

1. Console pour véhicule automobile destinée à être montée coulissante sur le plancher dudit véhicule le long de son axe longitudinal médian, ladite console comportant un caisson (200) définissant au moins un logement latéral vertical (225) accessible par une fente d'entrée (227), ainsi qu'au moins un plateau (241) monté mobile sur ledit caisson (200) via des moyens de guidage à coulissement et à pivotement entre une position rangée dans laquelle ledit plateau (241) est reçu dans ledit logement (225) et une position déployée dans laquelle ledit plateau (241) s'étend à l'horizontale de sorte à former une table ; lesdits moyens de guidage comportant, pour chaque dit plateau (241), une poutre cylindrique (250) solidaire dudit caisson (200) et s'étendant le long de la fente d'entrée (227) du logement (225) correspondant, **caractérisée en ce qu'**une platine de guidage (260) montée à rotation sur ladite poutre (250), ladite platine (260) comprenant un guide (261) s'étendant radialement vis-à-vis de ladite poutre (250) et étant monté solidaire à coulissement le long d'un profilé (246) s'étendant le long dudit plateau (241).

2. Console selon la revendication 1, **caractérisée en ce que** ledit guide (261) présente une longueur au moins deux fois supérieure à la largeur dudit profilé (246).

3. Console selon l'une des revendications précédentes, **caractérisée en ce que** ladite platine (260) comporte au moins une languette (262) dont l'extrémité libre est apte, lors du rangement dudit plateau (241) dans son logement (225), à glisser à frottement le long d'une nervure (247) ménagée le long dudit plateau (241) de sorte à ralentir sa descente.

4. Console selon la revendication 3, **caractérisé en ce que** ladite platine (260) comporte deux dites languettes (262) s'étendant symétriquement de part et d'autre dudit guide (261) et aptes à coopérer avec deux dites nervures (247) s'étendant symétriquement de part et d'autre dudit profilé (246).

5. Console selon l'une des revendications précédentes, **caractérisée en ce que** ladite platine (260) comprend au moins une patte de verrouillage (264) s'étendant radialement vis-à-vis de ladite poutre (250) et portant une dent (265) prévue pour coopérer par encliquetage, lorsque ledit plateau (241) vient occuper ladite position rangée, avec un ergot correspondant (248) saillant de la face interne dudit plateau (241).

6. Console selon l'une des revendications précédentes, **caractérisée en ce que** lesdits moyens de guidage comportent également, pour chaque dit plateau (241), au moins un organe de guidage complémentaire (270) ménagé sur ledit caisson (200) le long de l'une des parois (221) définissant ledit logement (225) et apte à être traversé à coulissement par ledit profilé (246) lors du rangement dudit plateau (241).

7. Console selon la revendication 6, **caractérisée en ce que** ledit organe de guidage complémentaire (270) comprend également une languette (271) apte, lors du rangement dudit plateau (241) dans son logement (225), à glisser à frottement le long dudit profilé (246) de sorte à ralentir la descente dudit plateau (241).

8. Console selon l'une des revendications 6 ou 7, **caractérisée en ce que** lesdits moyens de guidage comportent, pour chaque dit plateau (241), deux dits organes de guidage complémentaires (270) aptes à être traversés successivement à coulissement par ledit profilé (246) lors de son rangement dans ledit logement (225).

9. Console selon l'une des revendications précédentes, **caractérisée en ce que** chaque dit plateau (241) comprend au moins une butée (249) apte à venir au contact de ladite poutre (250) afin d'éviter l'extraction complète dudit plateau (241) hors de son logement (225) lorsqu'il est déployé par l'usager.

10. Console selon l'une des revendications précédentes, **caractérisée en ce que** chaque dit plateau (241) comporte au moins une cale (245) présentant un renfoncement d'accueil à fond hémicylindrique (245A) complémentaire de ladite poutre (250) et apte, lorsque ledit plateau (241) vient occuper ladite position rangée, à recevoir ladite poutre (250) de sorte à éviter tout débattement transversal dudit plateau (241).

## Patentansprüche

1. Konsole für ein Kraftfahrzeug, die dazu bestimmt ist, gleitend auf dem Boden des Fahrzeugs entlang seiner Längsmittelachse montiert zu werden, wobei die Konsole ein Gehäuse (200) umfasst, das mindestens eine vertikale seitliche Aufnahme (225) definiert, die durch einen Eingangsschlitz (227) zugänglich ist, sowie mindestens ein Tablett (241), das an dem Gehäuse (200) über Gleit- und Schwenkführungsmittel zwischen einer verstauten Position, in der das Tablett (241) in dem Gehäuse (225) aufgenommen ist, und einer ausgefahrenen Position, in der sich das Tablett (241) horizontal erstreckt, so dass es einen Tisch bildet, beweglich montiert ist; wobei die Führungseinrichtung für jedes Tablett (241) einen zylindrischen Träger (250) aufweist, der mit dem Kasten (200) einstückig ist und sich entlang des Einlaßschlitzes (227) des entsprechenden Gehäuses (225) erstreckt, **dadurch gekennzeichnet, daß** eine Führungsplatte (260) drehbar auf dem Träger (250) angebracht ist, wobei die Platte (260) eine Führung (261) aufweist, die sich radial in Bezug auf den Träger (250) erstreckt und einstückig zum Gleiten entlang eines sich entlang der Platte (241) erstreckenden Abschnitts (246) montiert ist.

2. Konsole nach Anspruch 1, **dadurch gekennzeichnet, dass** die Führung (261) eine Länge aufweist, die mindestens doppelt so lang ist wie die Breite des Profils (246).

3. Konsole nach einem der vorhergehenden Ansprüche, **dadurch gekennzeichnet, dass** die Platte (260) mindestens eine Zunge (262) aufweist, deren freies Ende in der Lage ist, wenn die Platte (241) in ihrer Aufnahme (225) gelagert ist, reibschlüssig entlang einer Rippe (247) zu gleiten, die entlang der Platte (241) vorgesehen ist, um deren Absinken zu verlangsamen.

4. Konsole nach Anspruch 3, **dadurch gekennzeichnet, dass** die genannte Platte (260) zwei genannte Zungen (262) umfasst, die sich symmetrisch auf beiden Seiten der genannten Führung (261) erstrecken und mit zwei genannten Rippen (247) zusammenwirken können, die sich symmetrisch auf beiden Seiten des genannten Profils (246) erstrecken.

5. Konsole nach einem der vorhergehenden Ansprüche, **dadurch gekennzeichnet, dass** die Platte (260) mindestens einen Verriegelungsvorsprung (264) aufweist, der sich radial in Bezug auf den Balken (250) erstreckt und einen Zahn (265) trägt, der dazu bestimmt ist, durch Einrasten zusammenzuwirken, wenn die Platte (241) die Stauposition einnimmt, mit einem entsprechenden Vorsprung (248), der von der Innenfläche der Platte (241) vorsteht.

6. Konsole nach einem der vorhergehenden Ansprüche, **dadurch gekennzeichnet, dass** die genannten Führungsmittel außerdem für jede der genannten Schalen (241) mindestens ein komplementäres Führungselement (270) umfassen, das an dem genannten Kasten (200) entlang einer der Wände (221) vorgesehen ist, die die genannte Aufnahme (225) definieren, und das von dem genannten Profil (246) gleitend durchlaufen werden kann, wenn die genannte Schale (241) gelagert wird.

7. Konsole nach Anspruch 6, **dadurch gekennzeichnet, dass** das komplementäre Führungselement (270) auch eine Zunge (271) aufweist, die, wenn die Schale (241) in ihrer Aufnahme (225) gelagert ist, in der Lage ist, reibschlüssig entlang des Profils (246) zu gleiten, um das Absinken der Schale (241) zu verlangsamen.

8. Konsole nach einem der Ansprüche 6 oder 7, **dadurch gekennzeichnet, dass** die Führungsmittel für jedes der Tabletts (241) zwei komplementäre Führungsorgane (270) umfassen, die nacheinander gleitend von dem Profil (246) durchlaufen werden können, wenn das Tablett in dem Gehäuse (225) gelagert wird.

9. Konsole nach einem der vorhergehenden Ansprüche, **dadurch gekennzeichnet, dass** jede der genannten Schalen (241) mindestens einen Anschlag (249) aufweist, der mit dem genannten Träger (250) in Kontakt kommen kann, um das vollständige Herausziehen der genannten Schale (241) aus ihrer Aufnahme (225) zu verhindern, wenn sie vom Benutzer ausgefahren wird.

10. Konsole nach einem der vorhergehenden Ansprüche, **dadurch gekennzeichnet, dass** jede der genannten Schalen (241) mindestens einen Keil (245) umfasst, der eine halbzylindrische Aufnahmeaussparung (245A) mit Boden aufweist, die zu dem genannten Träger (250) komplementär ist und in der Lage ist, wenn die genannte Schale (241) die genannte Stauposition einnimmt, den genannten Träger (250) so aufzunehmen, dass jede Querverschiebung der genannten Schale (241) vermieden wird.

## Claims

1. Console for a motor vehicle intended to be slidably mounted on the floor of said vehicle along its longitudinal median axis, said console comprising a box (200) defining at least one vertical lateral housing (225) accessible through an entry slot (227), as well as at least one tray (241) movably mounted on said housing (200) via sliding and pivoting guide means between a stowed position in which said tray (241) is received in said housing (225) and a deployed position in which said tray (241) extends horizontally so as to form a table ; said guide means comprising, for each said tray (241), a cylindrical beam (250) integral with said box (200) and extending along the entry slot (227) of the corresponding housing (225), **characterised in that** a guide plate (260) rotatably mounted on said beam (250), said plate (260) comprising a guide (261) extending radially with respect to said beam (250) and being integrally mounted for sliding along a profile (246) extending along said plate (241).

2. Console according to claim 1, **characterised in that** said guide (261) has a length at least twice as long as the width of said profile (246).

3. Console according to one of the preceding claims, **characterised in that** said plate (260) comprises at least one tongue (262) whose free end is capable, when said plate (241) is stored in its housing (225), of sliding with friction along a rib (247) provided along said plate (241) so as to slow down its descent.

4. Console according to claim 3, **characterised in that** said plate (260) comprises two said tongues (262) extending symmetrically on either side of said guide (261) and able to cooperate with two said ribs (247) extending symmetrically on either side of said profile (246).

5. Console according to one of the preceding claims, **characterised in that** said plate (260) comprises at least one locking lug (264) extending radially with respect to said beam (250) and carrying a tooth (265) designed to cooperate by snap-fitting, when said plate (241) comes to occupy said stowed position, with a corresponding lug (248) projecting from the internal face of said plate (241).

6. Console according to one of the preceding claims, **characterised in that** said guide means also comprise, for each said tray (241), at least one complementary guide member (270) provided on said box (200) along one of the walls (221) defining said housing (225) and capable of being slidably traversed by said profile (246) when said tray (241) is stored.

7. A console according to claim 6, **characterised in that** said complementary guide member (270) also comprises a tongue (271) capable, when said tray (241) is stored in its housing (225), of sliding frictionally along said profile (246) so as to slow down the descent of said tray (241).

8. Console according to one of claims 6 or 7, **characterised in that** said guide means comprise, for each said tray (241), two said complementary guide members (270) capable of being successively slidably traversed by said profile (246) when said tray is stored in said housing (225).

9. Console according to one of the preceding claims, **characterised in that** each said tray (241) comprises at least one stop (249) capable of coming into contact with said beam (250) in order to prevent the complete extraction of said tray (241) from its housing (225) when it is deployed by the user.

10. Console according to one of the preceding claims, **characterised in that** each said tray (241) comprises at least one wedge (245) having a semi-cylindrical bottomed receiving recess (245A) complementary to said beam (250) and capable, when said tray (241) comes to occupy said stowed position, of receiving said beam (250) so as to avoid any transverse movement of said tray (241).
